# EUROPÄISCHE PATENTSCHRIFT

(11) **EP 3 788 405 B1**
(45) Veröffentlichungstag und Bekanntmachung des Hinweises auf die Patenterteilung: **17.04.2024**
(21) Anmeldenummer: 19722035.3
(22) Anmeldetag: 29.04.2019
(51) Int. Cl.: G01S 17/931, G01S 7/497

(54) **VERFAHREN ZUM BESTIMMEN EINER WINKELLAGE EINES OPTOELEKTRONISCHEN SENSORS SOWIE PRÜFSTAND**
METHOD FOR DETERMINING THE ANGULAR POSITION OF AN OPTOELECTRONIC SENSOR, AND TEST STAND
PROCÉDÉ POUR DÉTERMINER UNE POSITION ANGULAIRE D'UN CAPTEUR OPTOÉLECTRONIQUE ET BANC D'ESSAI

(30) Priorität: 04.05.2018 DE 102018110776
(43) Veröffentlichungstag der Anmeldung: 10.03.2021
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE); NIESTORUK, Lukasz, 74321 Bietigheim-Bissingen (DE); STREDNICKI, Andreas, 74321 Bietigheim-Bissingen (DE)
(74) Vertreter: Pothmann, Karsten
(86) Internationale Anmeldenummer: PCT/EP2019/060839
(87) Internationale Veröffentlichungsnummer: WO 2019/211209

(56) Entgegenhaltungen:
- EP-A1- 1 557 691
- EP-A2- 1 947 473
- EP-A2- 3 176 606
- US-B1- 9 052 721

## Beschreibung

Die Erfindung betrifft ein Verfahren zur Bestimmung zumindest einer Winkellage eines optoelektronischen Sensors eines Kraftfahrzeugs. Mittels des optoelektronischen Sensors werden Lichtstrahlen in eine Umgebung des Kraftfahrzeugs emittiert und die als an einem Objekt reflektierte Lichtstrahlen werden durch eine Empfangseinheit des optoelektronischen Sensors empfangen. Die empfangenen Lichtstrahlen werden durch eine Auswerteeinheit in einem Sensorbild dargestellt. Ferner betrifft die Erfindung einen Prüfstand.

Aus dem Stand der Technik sind bereits Verfahren zur Detektion von Fehlausrichtungen von Lidarsensoren bekannt. Lidarsensoren beziehungsweise Laserscanner werden beispielsweise nach der Endmontage im Kraftfahrzeug oder in einer Werkstatt nach einer Reparatur kalibriert. Für die Kalibrierung werden im Stand der Technik sogenannte Kalibriertargets verwendet, wie diese beispielsweise in der DE 10 2004 033 14 A1 offenbart werden. Solche Kalibriertargets weisen eine definierte Form und ein definiertes Muster aus schwarzen und weißen Flächen auf und werden für den Kalibriervorgang vor dem Fahrzeug positioniert.

Aus der EP 1 947 473 A2 ist ein Verfahren und eine Messstrecke zum Ausrichten eines Abstandssensors an einem Fahrzeug bekannt.

Aus der EP 3 176 606 A2 ist ein Verfahren zum Ausrichten eines Laserscanners bekannt, wobei die Ausrichtung des Laserscanners mittels einer Verstellvorrichtung zumindest um eine Nickachse und eine Rollachse veränderbar ist.

Aufgabe der vorliegenden Erfindung ist es ein Verfahren sowie einem Prüfstand zu schaffen, mittels welchem eine Kalibrierung des optoelektronischen Sensors zuverlässig und schnell durchgeführt werden kann.

Diese Aufgabe wird durch ein Verfahren gemäß dem unabhängigen Anspruch gelöst.

Ein Aspekt der Erfindung betrifft ein Verfahren zur Bestimmung zumindest einer Winkellage eines optoelektronischen Sensors eines Kraftfahrzeugs. Mittels des optoelektronischen Sensors werden Lichtstrahlen in eine Umgebung des Kraftfahrzeugs emittiert. Die emittierten Lichtstrahlen werden an einem Objekt reflektiert und von einer Empfangseinheit mit zumindest zwei Empfangselementen empfangen. Die empfangenen Lichtstrahlen werden durch eine Auswerteeinheit als Abtastpunkte in einem von dem optoelektronischen Sensor erzeugten Sensorbild dargestellt. Jeder Abtastpunkt wird hierbei einem Empfangselement zugeordnet.

In dem Sensorbild werden zumindest zwei linienförmige Messstrukturen erkannt. Die zumindest zwei linienförmigen Messstrukturen sind parallel zueinander beabstandet angeordnet. Zur Bestimmung der zumindest einen Winkellage des optoelektronischen Sensors wird abhängig von den Abtastpunkten, die die erste und die zweite Messstruktur darstellen, zumindest eine Winkelabweichung von einer Soll-Winkellage bestimmt. Abhängig von der zumindest einen Winkelabweichung wird der optoelektronische Sensor kalibriert.

Das erfindungsgemäße Verfahren ermöglicht es, dass ein optoelektronische Sensor kalibriert werden kann, ohne dass ein spezielles Kalibriertarget benötigt wird. Dies ermöglicht eine einfache und schnelle Kalibrierung des optoelektronischen Sensors. Insbesondere werden keine Kalibriertargets benötigt, die an vordefinierten Positionen in der Umgebung des Kraftfahrzeugs angeordnet werden müssen. Stattdessen können Objekte verwendet werden, die als linienförmige, parallel zueinander beabstandete Messstrukturen im Sensorbild dargestellt werden.

Durch das Zuordnen der Abtastpunkte zu den zumindest zwei Empfangselementen werden zumindest zwei Ebenen im Sensorbild definiert. Damit ein Objekt im Sensorbild als linienförmige Messstruktur im Sinne der Erfindung gilt, müssen die Abtastpunkte, die dem Objekt im Sensorbild zugeordnet werden, Ebenen übergreifend mit einer durchgehenden Linie verbunden werden können. Die durchgehende Linie kann insbesondere eine Gerade sein. Alternativ kann die Linie auch eine Krümmung aufweisen. Zur Bestimmung der Winkellage des optoelektronischen Sensors werden im Sensorbild zumindest zwei Messstrukturen erkannt, die jeweils diesen Anforderungen entsprechen, und zudem parallel zueinander beabstandet angeordnet sind.

Mittels des erfindungsgemäßen Verfahrens lässt sich somit die zumindest eine Winkellage des optoelektronischen Sensors insbesondere relativ zum Kraftfahrzeug bestimmen. Insbesondere kann dadurch eine Fehlausrichtung des optoelektronischen Sensors erkannt werden und mittels der Auswerteeinheit korrigiert werden, sodass ein verbesserter Betrieb des optoelektronischen Sensors ermöglicht ist.

Erfindungsgemäß wird in dem erzeugten Sensorbild mit zumindest zwei empfangenen Abtastpunkten des ersten Empfangselements ein Sensorkoordinatensystem gebildet. Zusätzlich wird mit zumindest einem Abtastpunkt des ersten Empfangselementes und mit zumindest einem Abtastpunkt des zweiten Empfangselementes ein Referenzkoordinatensystem bestimmt. Die Abtastpunkte, die das Sensorkoordinatensystem bestimmen, und die Abtastpunkte, die das Referenzkoordinatensystem bilden, sind hierbei derselben der zumindest zwei Messstrukturen im Sensorbild zugeordnet. Zur Bestimmung der zumindest einen Winkellage des optoelektronischen Sensors wird die zumindest eine Winkelabweichung des optoelektronischen Sensors von der Soll-Winkellage durch Vergleich des Sensorkoordinatensystem mit dem Referenzkoordinaten-system bestimmt wird. Dadurch kann zuverlässig eine Winkellage des optoelektronischen Sensors bestimmt werden.

In einer weiteren Ausführungsform wird ein Gierwinkel als Winkelabweichung des optoelektronischen Sensors bestimmt. Bei dem Gierwinkel, welcher im Englischen auch als "Yaw" bezeichnet wird, kann es sich insbesondere um eine Drehung des optoelektronischen Sensors um eine Vertikalachse des Kraftfahrzeugs handeln. Durch die Bestimmung der Winkelabweichung als Gierwinkel kann insbesondere die Drehung um die Vertikalachse des optoelektronischen Sensors bestimmt werden und insbesondere diese Winkelabweichung des optoelektronischen Sensors kalibriert beziehungsweise korrigiert werden, sodass ein Sensorbild des optoelektronischen Sensors um diesen Gierwinkel korrigiert zur Verfügung gestellt werden kann.

In einer weiteren Ausführungsform wird ein Nickwinkel als Winkelabweichung des optoelektronischen Sensors bestimmt. Bei dem Nickwinkel, welcher im Englischen auch als "Pitch" bezeichnet wird, kann es sich insbesondere um eine Drehung des optoelektronischen Sensors um eine Querachse des Kraftfahrzeugs handeln. Durch die Bestimmung der Winkelabweichung als Nickwinkel kann insbesondere die Drehung um die Querachse des optoelektronischen Sensors bestimmt werden und insbesondere diese Winkelabweichung des optoelektronischen Sensors kalibriert beziehungsweise korrigiert werden, sodass ein Sensorbild des optoelektronischen Sensors um diesen Nickwinkel korrigiert zur Verfügung gestellt werden kann.

Gemäß einer weiteren Ausführungsform werden der Gierwinkel und der Nickwinkel als jeweilige Winkelabweichung bestimmt, wobei der Gierwinkel auf einem ersten Prozessorkern des optoelektronischen Sensors und der Nickwinkel auf einem zweiten Prozessorkern des optoelektronischen Sensors bestimmt werden. Somit können parallel der Gierwinkel und der Nickwinkel und parallel auf unterschiedlichen Prozessorkernen bestimmt werden. Insbesondere kann dann die Auswerteeinheit, abhängig von den jeweiligen bestimmten Gierwinkel/Nickwinkel durch die Prozessorkerne eine Korrektur beziehungsweise eine Kalibrierung des optoelektronischen Sensors durchführen. Dadurch lässt sich zuverlässig und schnell der Gierwinkel und der Nickwinkel gleichzeitig bestimmen, sodass zuverlässig und sicher die Kalibrierung des optoelektronischen Sensors durchgeführt werden kann.

In einer Ausführungsform wird zur Bestimmung der zumindest einen Winkellage die Winkelabweichung des optoelektronischen Sensors von einer Soll-Winkellage zwischen zumindest einer Abtastachse und einer Referenzachse des optoelektronischen Sensors bestimmt. Die Abtastachse wird durch zumindest einen Abtastpunkt der ersten Messstruktur und durch zumindest einen Abtastpunkt der zweiten Messstruktur gebildet wird. Mit dieser Ausführungsform kann vorteilhafterweise ein Rollwinkel als Winkelabweichung des optoelektronischen Sensors bestimmt werden. Bei dem Rollwinkel, welcher im Englischen auch als "Roll" bezeichnet wird, kann es sich insbesondere um eine Drehung des optoelektronischen Sensors um eine Längsachse des Kraftfahrzeugs handeln. Durch die Bestimmung des Rollwinkels, insbesondere die Drehung um diese Längsachse des optoelektronischen Sensors bestimmt, kann diese Winkellage des optoelektronischen Sensors kalibriert beziehungsweise korrigiert werden, sodass ein Sensorbild des optoelektronischen Sensors um den Rollwinkel korrigiert zur Verfügung gestellt werden kann.

Gemäß einer weiteren vorteilhaften Ausführungsform werden als erste Winkelabweichung der Gierwinkel und als zweite Winkelabweichung der Nickwinkel bestimmt und nach dem Bestimmen des Gierwinkels und/oder des Nickwinkels wird als dritte Winkelabweichung der Rollwinkel bestimmt. Da insbesondere der Rollwinkel abhängig vom Gierwinkel und/oder Nickwinkel ist kann durch die Bestimmung des Nickwinkels und des Gierwinkels vor der Bestimmung des Rollwinkels der Rollwinkel sehr zuverlässig bestimmt werden. Insbesondere kann somit jegliche Fehlausrichtung des optoelektronischen Sensors schnell und zuverlässig bestimmt werden und der optoelektronische Sensor kalibriert werden.

In einer weiteren Ausführungsform befindet sich das Kraftfahrzeug während des Bestimmens der Winkellage im Stillstand. Beispielsweise kann nach der Endmontage oder während eines Werkstattbesuchs das Kraftfahrzeug in eine Umgebung mit zumindest zwei linienförmigen Messstrukturen eingefahren werden und zum Stillstand gebracht werden. Der optoelektronische Sensor kann anschließend mit den Messstrukturen kalibriert werden. Eine exakte Ausrichtung des Kraftfahrzeugs relativ zu den Messstrukturen ist hierbei nicht notwendig. Durch Bestimmung der Winkellage des optoelektronischen Sensors im Stillstand kann die Winkellage unabhängig von Umwelteinflüssen wie beispielsweise durch den Motor erzeugten Vibrationen bestimmt werden. Somit kann die Winkellage zuverlässig bestimmt werden.

In einer weiteren Ausführungsform ist das Kraftfahrzeug während der Bestimmung der Winkellage in Bewegung. Mit anderen Worten ist das Kraftfahrzeug während der Bestimmung relativ zu den zumindest zwei linienförmigen Messstrukturen in Bewegung. Hierbei kann das Fahrzeug sowohl manuell durch einen Fahrer gesteuert werden als auch selbstständig steuern. Alternativ kann das Fahrzeug auch auf einem Förderband relativ zu den Messstrukturen bewegt werden. Durch das Bewegen des Fahrzeugs relativ zu den Messstrukturen kann die zumindest eine Winkellage des optoelektronischen Sensors insbesondere als Mittelwert über eine Vielzahl an Messungen aus unterschiedlichen Blickwinkeln bestimmt werden.

In einer weiteren Ausführungsform handelt es sich bei den zumindest zwei linienförmigen, parallel zueinander beabstandet angeordneten Messstrukturen um zumindest zwei Markierungen, die auf einem Boden aufgetragen sind, auf welchem sich das Kraftfahrzeug befindet. Als Markierungen können hier beispielsweise Materialien oder Farben genutzt werden, die auch für Fahrbahnmarkierungen genutzt werden. Diese Farben und Materialien können insbesondere hoch reflektierende Partikel enthalten, sodass die Markierungen besonders gut erfasst werden können. Zusätzlich können solche Markierungen mit geringem Aufwand sowohl in einer Werkstatt als auch in einer Montagehalle auf einem Boden aufgetragen werden.

In einer weiteren Ausführungsform zumindest zwei parallele Wände als linienförmige, parallel zueinander beabstandete Messstrukturen in der Umgebung erfasst werden. Bei den zwei parallelen Wänden kann es sich sowohl um Außenwände einer Werkstatt oder einer Montagehalle handeln als auch um wandartige Strukturen, die parallel zueinander beabstandet angeordnet sind. Als wandartige Struktur kann beispielsweise eine Holzplatte oder eine Metallplatte in Betracht kommen. Die parallelen Wände können zusätzlich mit einer reflektierenden Schicht überzogen sein. Durch das Verwenden von parallelen Wänden kann das Verfahren sicher und zuverlässig auch bei einfacher Bedingungen durchgeführt werden.

Ein weiterer Aspekt außerhalb des Schutzumfangs der Ansprüche betrifft einen Prüfstand zur Bestimmung zumindest einer Winkellage eines optoelektronischen Sensors eines Kraftfahrzeugs. Der Prüfstand weist eine erste linienförmigen Messstruktur und zumindest eine zweite linienförmige Messstruktur auf, die beabstandet und parallel zueinander angeordnet sind. In einer Ausführungsform außerhalb des Schutzumfangs der Ansprüche sind die erste und die zweite linienförmige Messstruktur Markierungen auf einem Boden in der Umgebung des Kraftfahrzeugs oder parallel zueinander beabstandete Wände in der Umgebung des Fahrzeugs. Hierbei kann es sich insbesondere um Wände eine Fertigungshalle oder einer Werkstatt handeln. Alternativ kann es sich bei den Wänden um parallel zueinander angeordnete Platten aus Holz, Metall oder ähnlichem handeln. Weiterhin können die Wände mit einem reflektierenden Material beschichtet sein.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Draufsicht auf ein Kraftfahrzeug mit einer Ausführungsform eines optoelektronischen Sensors;
- Fig. 2: eine schematische Ansicht einer Ausführungsform eines Prüfstands außerhalb des Schutzumfangs der Ansprüche;
- Fig. 3: eine erste schematische Ansicht einer Ausführungsform zur Bestimmung einer Winkellage;
- Fig. 4: eine zweite schematische Ansicht einer Ausführungsform zur Bestimmung einer Winkellage; und
- Fig. 5: eine dritte schematische Ansicht einer Ausführungsform zur Bestimmung einer weiteren Winkellage.

In den Figuren werden gleiche und funktionsgleiche Elemente mit den gleichen Bezugszeichen versehen.

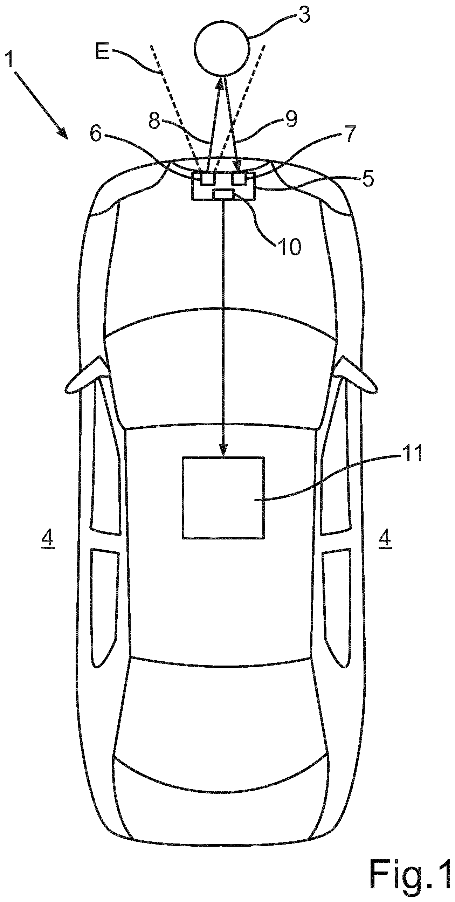

Fig. 1 zeigt ein Kraftfahrzeug 1 mit einem Fahrerassistenzsystem 2. Mit dem Fahrerassistenzsystem 2 kann beispielsweise ein Objekt 3, welches sich in einer Umgebung 4 des Kraftfahrzeugs 1 befindet, erfasst werden. Insbesondere kann mittels des Fahrerassistenzsystems 2 ein Abstand zwischen dem Kraftfahrzeug 1 und dem Objekt 3 bestimmt werden.

Das Fahrerassistenzsystem 2 umfasst zumindest einen optoelektronischen Sensor 5. Der optoelektronische Sensor 5 kann als Lidarsensor oder als Laserscanner ausgebildet sein. Der optoelektronische Sensor 5 ist vorliegend an einem Frontbereich des Kraftfahrzeugs 1 angeordnet. Der optoelektronische Sensor 5 kann auch an anderen Bereichen, beispielsweise an einem Heckbereich oder an einem Seitenbereich, des Kraftfahrzeugs 1 angeordnet werden.

Der optoelektronische Sensor 5 umfasst eine Sendeeinrichtung 6, mit der Lichtstrahlen 8 ausgesendet beziehungsweise emittiert werden können. Mit der Sendeeinrichtung 6 können die Lichtstrahlen 8 innerhalb eines vorbestimmten Erfassungsbereichs E beziehungsweise eines vorbestimmten Winkelbereichs ausgesendet werden. Beispielsweise können die Lichtstrahlen 8 in einem vorbestimmten horizontalen Winkelbereich ausgesendet werden. Darüber hinaus umfasst der optoelektronische Sensor 5 eine nicht dargestellte Ablenkeinrichtung, mit der die Lichtstrahlen 8 in die Umgebung 4 abgelenkt werden können und somit der Erfassungsbereich E abgetastet wird.

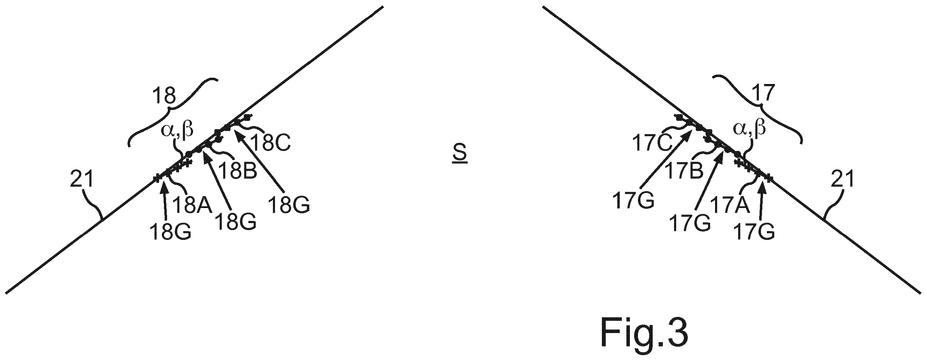

Darüber hinaus umfasst der optoelektronische Sensor 5 eine Empfangseinheit 7, die zumindest zwei Empfangselemente aufweisen kann. Mit der Empfangseinheit 7 können die von dem Objekt 3 reflektierten Lichtstrahlen 9 als Empfangssignal empfangen werden. Ferner kann der optoelektronische Sensor 5 eine Steuerungseinrichtung, die beispielsweise durch eine Mikrocontroller oder einen digitalen Signalprozessor gebildet sein kann, aufweisen. Der optoelektronische Sensor 5 kann eine Auswerteeinheit 10 aufweisen, mittels welcher die empfangenen reflektierten Lichtstrahlen 9 als Abtastpunkte 17, 18, 19, 20 (siehe Fig. 3) in einem Sensorbild des optoelektronischen Sensors 5 dargestellt werden können. Das Fahrerassistenzsystem 2 umfasst ferner eine Steuerungseinrichtung 11, die beispielsweise durch ein elektronisches Steuergerät (ECUelectronic control unit) des Kraftfahrzeugs 1 gebildet sein kann. Die Steuerungseinrichtung 11 ist zur Datenübertragung mit dem optoelektronischen Sensor 5 verbunden. Die Datenübertragung kann beispielsweise über den Datenbus des Kraftfahrzeugs 1 erfolgen.

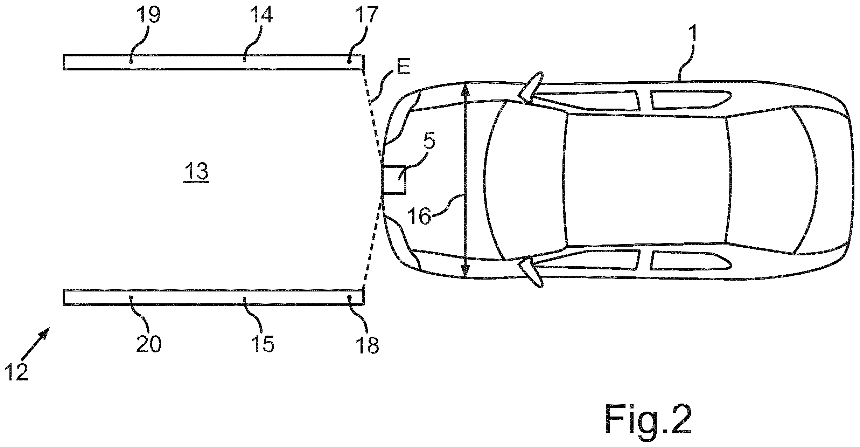

Fig. 2 zeigt eine schematische Draufsicht auf eine Ausführungsform eines Prüfstands 12 in einem Prüfbereich 13 außerhalb des Schutzumfangs der Ansprüche. Der Prüfbereich 13 ist der Bereich in einer Fertigungshalle oder einer Werkstatt, in dem der Prüfstand 12 angeordnet ist und indem das Fahrzeug positioniert bzw. bewegt wird. Der Prüfstand 12 weist zwei Markierungen als linienförmige Messstrukturen 14,15 auf, die auf einem Boden angeordnet sind. Die Markierungen 14, 15 sind parallel zueinander beabstandet auf einem Boden aufgetragen. Die Markierungen bestehen aus einer Farbe, die hoch reflektierende Partikel aufweist. Das Kraftfahrzeug 1 ist so vor dem Prüfstand 12 im Prüfbereich 13 positioniert, das der in der Front des Kraftfahrzeugs 1 angeordnete optoelektronische Sensor 5 die Markierungen erfassen kann. Das Kraftfahrzeug 1 befindet sich zur Kalibrierung des optoelektronischen Sensors 5 im Stillstand.

Fig. 3 zeigt eine schematische Perspektivansicht eines Sensorbilds S des optoelektronischen Sensors 5 bei der Erfassung eines Prüfstandes gemäß Fig. 2. Der optoelektronische Sensor 5 weist in dem vorliegenden Ausführungsbeispiel drei Empfangselemente der Empfangseinheit 7 auf, mittels welchen an einem Objekt reflektierte Lichtstrahlen erfasst werden können. Die erfassten reflektierten Lichtstrahlen werden von der Auswerteeinheit 6 als Abtastpunkte 17, 18 im Sensorbild des optoelektronischen Sensors 5 dargestellt. Die drei Empfangselemente definieren drei voneinander getrennte Ebenen im Sensorbild. Innerhalb einer Ebene werden die reflektierten Lichtstrahlen dargestellt, die aus unterschiedlichen horizontalen Winkeln relativ zum optoelektronischen Sensor 5 mit von dem jeweiligen Empfangselement erfassten erfasst wurden. Die Abtastpunkte 17 stellen die erste Markierung im Sensorbild dar, wobei die Abtastpunkte 17A in der ersten Ebene des Sensorbildes abgebildet werden, die Abtastpunkte 17B in der zweiten Ebene und die Abtastpunkte 17C in der dritten Ebene. Die Abtastpunkte 18 stellen die erste Markierung im Sensorbild dar, wobei die Abtastpunkte 18A in der ersten Ebene des Sensorbildes abgebildet werden, die Abtastpunkte 18B in der zweiten Ebene und die Abtastpunkte 18C in der dritten Ebene. Zur Bestimmung der Winkellage des optoelektronischen Sensors 5 relativ zum Kraftfahrzeug 1 wird eine Winkelabweichung von einer Soll-Winkellage durch Vergleich eines Sensorkoordinatensystem mit einem Referenzkoordinatensystem bestimmt. Das Sensorkoordinatensystem wird durch eine Abtastpunktgerade 17G, 18G gebildet. Für jede Ebene im Sensorbild wird durch alle Abtastpunkte 17, 18 die einer Markierung zugeordnet sind. Die Abtastpunktgeraden 17G, 18G, die einer Markierung zugeordnet sind, sind parallel zueinander. Das Referenzkoordinatensystem wird durch eine Referenzgerade 21 gebildet. Die Referenzgerade 21 wird durch Abtastpunkte der drei Ebenen gelegt, die den gleichen horizontalen Winkel aufweisen. Entspricht die Winkellage des optoelektronischen Sensors 5 der Soll-Winkellage, so verlaufen die Abtastpunktgeraden 17G, 18G und die Refeferenzgerade 21 parallel zueinander. Weisen die Abtastpunktgeraden 17G, 18G und die Referenzgerade 21 Schnittpunkte auf, so wird eine Winkelabweichung des optoelektronischen Senors 5 als Winkel zwischen den Abtastpunktgeraden 17G, 18G und der Referenzgerade bestimmt. Auf diese Weise wird der Gierwinkel α und/oder der Nickwinkel β als Winkelabweichung bestimmt.

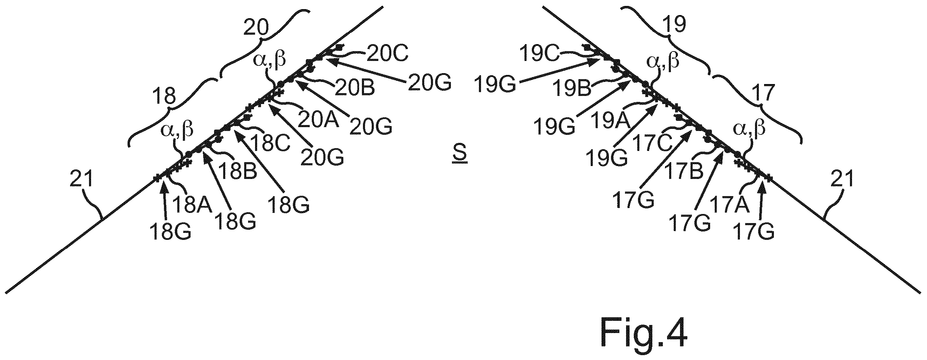

Fig. 4 zeigt eine schematische Perspektivansicht eines Sensorbilds S des optoelektronischen Sensors 5, wobei das Sensorbild auf zwei unterschiedlichen Messungen aufgebaut ist, die zeitlich nacheinander aufgenommen wurden und das Fahrzeug zwischen den Messungen bewegt wurde. Die Abtastpunkte 17, 18 wurden während der ersten Messung aufgenommen und die Abtastpunkt 19, 20 während der zweiten Messung. Die Abtastpunkte 17, 18, 19, 20 werden analog zur unter Fig. 3 beschrieben Auswertung ausgewertet. Auf diese Weise wird der der Gierwinkel α und/oder der Nickwinkel β als Winkelabweichung mit zwei Messungen mit unterschiedlichen Perspektiven auf die Markierungen bestimmt. Der Gierwinkel α und/oder der Nickwinkel β als Winkelabweichung werden jeweils als Mittelwert über die Einzelwerte für der Gierwinkel α und/oder der Nickwinkel β aus den beiden Messungen bestimmt.

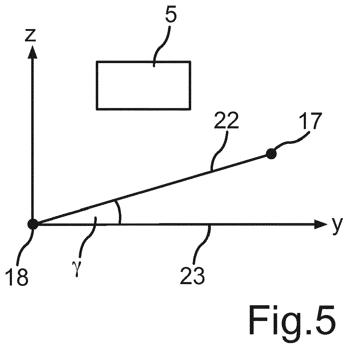

Fig. 5 zeigt eine schematische Queransicht zur Bestimmung des Rollwinkels γ als Winkelabweichung. Bei dem der Rollwinkel γ handelt es sich um eine Drehung um die Fahrzeuglängsachse X. Zur Bestimmung des Rollwinkels γ wird der Winkel zwischen einer Abtastachse 22 gelegt und mit einer Referenzachse 23 bestimmt. Die Abtastachse 22 wird durch eine Gerade gebildet, die durch einen Abtastpunkt 17, der der ersten Markierung zugordnet ist, und einen Abtastpunkt 18, der der zweiten Markierung zugeordnet ist, gelegt wird. Die Referenzachse 23 ist parallel zum Boden ausgerichtet. Entspricht die Winkellage des optoelektronischen Sensors 5 der Soll-Winkellage, dann sind Abtastachse 22 und Referenzachse 23 parallel zueinander. Weisen die Abtastachse 22 und die Referenzachse 23 einen Schnittpunkt auf, so entspricht der Winkel zwischen der Abtastachse 22 und der Referenzachse 23 dem Rollwinkels γ. Damit der Rollwinkels γ zuverlässig bestimmt werden kann, muss in einem vorhergehenden Schritt der Gierwinkel α und der Nickwinkel β bestimmt werden.

Abhängig von den bestimmten Winkelabweichungen wird der optoelektronische Sensor 5 kalibriert beziehungsweise korrigiert wird. Hierzu kann die Auswerteeinheit 10 des optoelektronischen Sensors 5 den Gierwinkel α, den Nickwinkel β und den Rollwinkel γ bestimmen und den optoelektronischen Sensor 5 kalibrieren. Das Sensorbild wird dann in dann im Fahrbetrieb um die entsprechenden Winkelabweichungen durch die Auswerteeinheit 10 korrigiert.

## Patentansprüche

1. Verfahren zur Bestimmung zumindest einer Winkellage eines optoelektronischen Sensors (5) eines Kraftfahrzeugs (1), wobei der optoelektronische Sensor zumindest eine Sendeeinrichtung (6), zumindest eine Empfangseinheit (7) mit zumindest zwei Empfangselementen und zumindest eine Auswerteeinheit (10) umfasst, mit folgenden Schritte:
- Aussenden von Lichtstrahlen (8) in eine Umgebung (4) des Kraftfahrzeugs (1) durch die Sendeeinrichtung (6)
- Empfangen von an einem Objekt (3) reflektierten Lichtstrahlen (8) durch die Empfangseinheit (7), wobei die Lichtstrahlen (8) durch die Auswerteeinheit (10) als Abtastpunkte (17, 18, 19, 20) in einem vom optoelektronischen Sensor (5) erzeugten Sensorbild (S) von der Umgebung (4) des Kraftfahrzeugs (1) dargestellt werden und jeder Abtastpunkt (17, 18, 19, 20) einem Empfangselement (7a, 7b) zugeordnet wird,
wobei zur Bestimmung der zumindest einen Winkellage zumindest zwei linienförmige Messstrukturen (14, 15) im Sensorbild (S) erkannt werden, die parallel zueinander beabstandet angeordnet sind,
wobei zur Bestimmung der zumindest einen Winkellage des optoelektronischen Sensors (5) abhängig von den Abtastpunkten (17, 18, 19, 20), die die erste und die zweite Messstruktur (14, 15) darstellen, zumindest eine Winkelabweichung des optoelektronischen Sensors (5) von einer Soll-Winkellage bestimmt wird und wobei abhängig von der zumindest einen Winkelabweichung der optoelektronische Sensor (5) kalibriert wird,
**dadurch gekennzeichnet,**
**dass** in dem erzeugten Sensorbild (S) mit zumindest zwei empfangenen Abtastpunkten (17A) des ersten Empfangselements (7a) ein Sensorkoordinatensystem und mit zumindest einem Abtastpunkt (17A) des ersten Empfangselementes und mit zumindest einem Abtastpunkt (17B) des zweiten Empfangselementes (7b) ein Referenzkoordinatensystem bestimmt wird, wobei die Abtastpunkte (17A), die das Sensorkoordinatensystem bestimmen, und die Abtastpunkte (17A, 17B), die das Referenzkoordinatensystem bilden, derselben der zumindest zwei Messstrukturen (14, 15) im Sensorbild (S) zugeordnet sind,
und **dass** zur Bestimmung der zumindest einen Winkellage des optoelektronischen Sensors (5) die zumindest eine Winkelabweichung des optoelektronischen Sensors (5) von der Soll-Winkellage durch Vergleich des Sensorkoordinatensystem mit dem Referenzkoordinatensystem bestimmt wird.

2. Verfahren nach Anspruch 1,
**dadurch gekennzeichnet, dass**
als Winkelabweichung ein Gierwinkel (α) des optoelektronischen Sensors (5) bestimmt wird.

3. Verfahren nach Anspruch 1,
**dadurch gekennzeichnet, dass**
als Winkelabweichung ein Nickwinkel (β) des optoelektronischen Sensors (5) bestimmt wird.

4. Verfahren nach Anspruch 1,
**dadurch gekennzeichnet, dass**
zur Bestimmung der Winkellage die Winkelabweichung des optoelektronischen Sensors (5) von einer Soll-Winkellage zwischen zumindest einer Abtastachse (22) und einer Referenzachse (23) des optoelektronischen Sensors (5) bestimmt wird, wobei die Abtastachse (22) durch zumindest einen Abtastpunkt (17, 18, 19, 20) der ersten Messstruktur (14) und durch zumindest einen Abtastpunkt (17, 18, 19,20) der zweiten Messstruktur (15) gebildet wird.

5. Verfahren nach Anspruch 4,
**dadurch gekennzeichnet, dass**
als Winkelabweichung ein Rollwinkel (γ) des optoelektronischen Sensors (5) bestimmt wird.

6. Verfahren nach einem der vorhergehenden Ansprüche,
**dadurch gekennzeichnet, dass**
als erste Winkelabweichung ein Gierwinkel (α) und/oder als zweite Winkelabweichung ein Nickwinkel (β) bestimmt wird und nach dem Bestimmen des Gierwinkels (α) und/oder des Nickwinkels (β) als dritte Winkelabweichung ein Rollwinkel (γ) bestimmt wird.

7. Verfahren nach einem der vorhergehenden Ansprüche,
**dadurch gekennzeichnet, dass**
sich das Kraftfahrzeug (1) während des Bestimmens der Winkellage im Stillstand befindet.

8. Verfahren nach einem der vorhergehenden Ansprüche,
**dadurch gekennzeichnet, dass**
das Kraftfahrzeug (1) während der Bestimmung der Winkellage in Bewegung ist.

9. Verfahren nach einem der vorhergehenden Ansprüche,
**dadurch gekennzeichnet, dass**
zumindest zwei Markierungen auf einem Boden, auf welchem sich das Kraftfahrzeug (1) befindet, als parallele Messstrukturen (14, 15) in der Umgebung (4) erfasst werden.

10. Verfahren nach einem der vorhergehenden Ansprüche,
**dadurch gekennzeichnet, dass**
zumindest zwei parallele Wände als parallele Messstrukturen (14, 15) in der Umgebung (4) erfasst werden.

## Claims

1. Method for determining at least one angular position of an optoelectronic sensor (5) of a motor vehicle (1), wherein the optoelectronic sensor comprises at least one transmitter device (6), at least one receiver unit (7) with at least two receiver elements, and at least one evaluation unit (10), said method including the following steps:
- emitting light beams (8) into surroundings (4) of the motor vehicle (1) by the transmitter device (6),
- receiving light beams (8) reflected at an object (3) by means of the receiver unit (7), wherein the light beams (8) are represented by the evaluation unit (10) as scan points (17, 18, 19, 20) in a sensor image (S) of the surroundings (4) of the motor vehicle (1) generated by the optoelectronic sensor (5) and each scan point (17, 18, 19, 20) is assigned to a receiver element (7a, 7b),
wherein
at least two line-shaped measurement structures (14, 15), which are arranged parallel to and at a distance from one another, are recognized in the sensor image (S) for the purposes of determining the at least one angular position,
wherein at least one angular deviation of the optoelectronic sensor (5) from a target angular position is determined for the purposes of determining the at least one angular position of the optoelectronic sensor (5) on the basis of the scan points (17, 18, 19, 20), which represent the first and the second measurement structure (14, 15), and wherein the optoelectronic sensor (5) is calibrated on the basis of the at least one angular deviation,
**characterized**
**in that** a sensor coordinate system is determined in the generated sensor image (S) using at least two received scan points (17A) of the first receiver element (7a) and a reference coordinate system is determined using at least one scan point (17A) of the first receiver element and using at least one scan point (17B) of the second receiver element (7b), wherein the scan points (17A), which determine the sensor coordinate system, and the scan points (17A, 17B), which form the reference coordinate system, are assigned to the same one of the at least two measurement structures (14, 15) in the sensor image (S), and in that the at least one angular deviation of the optoelectronic sensor (5) from the target angular position is determined, for the purposes of determining the at least one angular position of the optoelectronic sensor (5), by a comparison of the sensor coordinate system with the reference coordinate system.

2. Method according to Claim 1,
**characterized in that**
a yaw angle (α) of the optoelectronic sensor (5) is determined as angular deviation.

3. Method according to Claim 1,
**characterized in that**
a pitch angle (β) of the optoelectronic sensor (5) is determined as angular deviation.

4. Method according to Claim 1,
**characterized in that**
the angular deviation of the optoelectronic sensor (5) from a target angular position between at least one scan axis (22) and a reference axis (23) of the optoelectronic sensor (5) is determined for the purposes of determining the angular position, wherein the scan axis (22) is formed by at least one scan point (17, 18, 19, 20) of the first measurement structure (14) and by at least one scan point (17, 18, 19, 20) of the second measurement structure (15).

5. Method according to Claim 4,
**characterized in that**
a roll angle (γ) of the optoelectronic sensor (5) is determined as angular deviation.

6. Method according to one of the preceding claims,
**characterized in that**
a yaw angle (α) is determined as first angular deviation and/or a pitch angle (β) is determined as second angular deviation and a roll angle (γ) is determined as third angular deviation after the determination of the yaw angle (α) and/or the pitch angle (β).

7. Method according to one of the preceding claims,
**characterized in that**
the motor vehicle (1) is at a standstill while the angular position is determined.

8. Method according to one of the preceding claims,
**characterized in that**
the motor vehicle (1) is in motion while the angular position is determined.

9. Method according to one of the preceding claims,
**characterized in that**
at least two markings on a ground, on which the motor vehicle (1) is situated, are captured as parallel measurement structures (14, 15) in the surroundings (4).

10. Method according to one of the preceding claims,
**characterized in that**
at least two parallel walls are captured as parallel measurement structures (14, 15) in the surroundings (4).

## Revendications

1. Procédé pour déterminer au moins une position angulaire d'un capteur optoélectronique (5) d'un véhicule automobile (1), le capteur optoélectronique comprenant au moins un dispositif d'émission (6), au moins une unité de réception (7) avec au moins deux éléments de réception et au moins une unité d'évaluation (10), comprenant les étapes suivantes :
- émettre des rayons lumineux (8) dans un environnement (4) du véhicule automobile (1) par le dispositif d'émission (6),
- recevoir des rayons lumineux (8) réfléchis sur un objet (3) par l'unité de réception (7), les rayons lumineux (8) étant représentés par l'unité d'évaluation (10) sous forme de points d'échantillonnage (17, 18, 19, 20) dans une image de capteur (S) de l'environnement (4) du véhicule automobile (1) produite par le capteur optoélectronique (5), et chaque point d'échantillonnage (17, 18, 19, 20) étant associé à un élément de réception (7a, 7b),
dans lequel,
pour déterminer l'au moins une position angulaire, au moins deux structures de mesure (14, 15) en forme de lignes sont reconnues dans l'image du capteur (S), qui sont disposées parallèlement l'une à l'autre et espacées l'une de l'autre,
au moins un écart angulaire du capteur optoélectronique (5) par rapport à une position angulaire nominale étant déterminé pour déterminer l'au moins une position angulaire du capteur optoélectronique (5) en fonction des points d'échantillonnage (17, 18, 19, 20) qui représentent la première et la deuxième structure de mesure (14, 15), et le capteur optoélectronique (5) étant calibré en fonction dudit au moins un écart angulaire, **caractérisé**
**en ce que**, dans l'image de capteur (S) générée, un système de coordonnées de capteur est déterminé avec au moins deux points d'échantillonnage (17A) reçus du premier élément de réception (7a) et un système de coordonnées de référence est déterminé avec au moins un point d'échantillonnage (17A) du premier élément de réception et avec au moins un point d'échantillonnage (17B) du deuxième élément de réception (7b), les points d'échantillonnage (17A) qui déterminent le système de coordonnées de capteur, et les points d'échantillonnage (17A, 17B) qui forment le système de coordonnées de référence sont associés à la même des au moins deux structures de mesure (14, 15) dans l'image de capteur (S), et en ce que, pour déterminer l'au moins une position angulaire du capteur optoélectronique (5), on détermine ledit au moins un écart angulaire du capteur optoélectronique (5) par rapport à la position angulaire nominale par comparaison du système de coordonnées du capteur avec le système de coordonnées de référence.

2. Procédé selon la revendication 1,
**caractérisé en ce que**
un angle de lacet (α) du capteur optoélectronique (5) est déterminé en tant qu'écart angulaire.

3. Procédé selon la revendication 1,
**caractérisé en ce que**
un angle d'inclinaison (β) du capteur optoélectronique (5) est déterminé en tant qu'écart angulaire.

4. Procédé selon la revendication 1,
**caractérisé en ce que**
pour déterminer la position angulaire, l'écart angulaire du capteur optoélectronique (5) par rapport à une position angulaire nominale entre au moins un axe d'échantillonnage (22) et un axe de référence (23) du capteur optoélectronique (5) est déterminé, l'axe d'échantillonnage (22) étant défini par au moins un point d'échantillonnage (17, 18, 19, 20) de la première structure de mesure (14) et par au moins un point d'échantillonnage (17, 18, 19, 20) de la deuxième structure de mesure (15).

5. Procédé selon la revendication 4,
**caractérisé en ce que**
un angle de roulis (γ) du capteur optoélectronique (5) est déterminé en tant qu'écart angulaire.

6. Procédé selon l'une des revendications précédentes,
**caractérisé en ce que**
un angle de lacet (α) est déterminé en tant que premier écart angulaire et/ou un angle d'inclinaison (β) est déterminé en tant que deuxième écart angulaire et, après avoir déterminé l'angle de lacet (α) et/ou l'angle d'inclinaison (β), un angle de roulis (γ) est déterminé en tant que troisième écart angulaire.

7. Procédé selon l'une des revendications précédentes,
**caractérisé en ce que**
le véhicule automobile (1) est à l'arrêt pendant la détermination de la position angulaire.

8. Procédé selon l'une des revendications précédentes,
**caractérisé en ce que**
le véhicule automobile (1) est en mouvement pendant la détermination de la position angulaire.

9. Procédé selon l'une des revendications précédentes,
**caractérisé en ce que**
au moins deux marques sur un sol sur lequel se trouve le véhicule automobile (1) sont détectées en tant que structures de mesure parallèles (14, 15) dans l'environnement (4).

10. Procédé selon l'une des revendications précédentes,
**caractérisé en ce que**
au moins deux parois parallèles sont détectées en tant que structures de mesure parallèles (14, 15) dans l'environnement (4).
